# EUROPÄISCHE PATENTSCHRIFT

(11) **EP 0 400 127 B1**
(45) Veröffentlichungstag und Bekanntmachung des Hinweises auf die Patenterteilung: **07.07.1993**
(21) Anmeldenummer: 89913216.1
(22) Anmeldetag: 02.12.1989
(51) Int. Cl.: B62D 5/04

(54) **VERFAHREN ZUR UNTERSTÜTZUNG DER BEI EINEM FAHRZEUG AUFZUBRINGENDEN LENKKRÄFTE**
ASSISTED STEERING SYSTEM FOR A VEHICLE
SYSTEME DE DIRECTION ASSISTEE POUR VEHICULE

(30) Priorität: 16.12.1988 DE 3842334
(43) Veröffentlichungstag der Anmeldung: 05.12.1990
(73) Patentinhaber: ROBERT BOSCH GMBH, 70442 Stuttgart (DE)
(72) Erfinder: PFEFFER, Peter, D-7128 Lauffen/Neckar (DE); LABITZKE, Herbert, D-7145 Markgroeningen (DE); AHNER, Peter, D-7140 Ludwigisburg (DE); KLEINDIECK, Peter, D-7141 Grossbottwar (DE); SCHLEUTER, Willibert, D-7120 Bietigheim-Bissingen (DE); KIRBERG, Uwe, D-7145 Markgroeningen (DE)
(86) Internationale Anmeldenummer: DE8900751
(87) Internationale Veröffentlichungsnummer: WO9006880

(56) Entgegenhaltungen:
- EP-A- 125 512
- EP-A- 233 012
- DE-A- 3 400 915
- DE-A- 3 713 486
- GB-A- 2 163 110
- JP-A-63 301 173
- PATENT ABSTRACTS OF JAPAN, Band 281,(M-624)(2728), 11. September 1987

## Beschreibung

### Stand der Technik

Die Erfindung betrifft ein Verfahren zur Unterstützung der bei einem Fahrzeug aufzubringenden Lenkkräfte nach der Gattung des Anspruchs 1.

Bei einem bekannten Verfahren dieser Art wird ein Elektromotor beispielsweise mit einer Kugelumlauflenkung kombiniert. Aufgrund der Reibung innerhalb des Lenksystems wird die Rückwirkung der von der Straße auf die Lenkung wirkenden Kräfte gedämpft. Die Reibung führt zu einer sogenannten Momenten-Hysterese des Lenkgetriebes, das heißt also, entgegengesetzte Lenkmomente wirken sich nicht unmittelbar als Moment am Ausgang des Getriebes aus. Nachteil dieses Verfahrens ist es, daß der Lenkungskomfort aufgrund der festen Hysterese nicht bei allen Fahrzeuggeschwindigkeiten optimal ist.

In der GB,A,2163110 und dem Patent Abstract der JP,A,63301173 werden verschiedene Verfahren zur Verbesserung der Eigenschaften einer Lenkunterstützung beschrieben. Es hat sich gezeigt, daß mit beiden Verfahren nicht alle Fahrzustände hinsichtlich eines hohen Lenkkomforts und eines guten Kontaktes des Fahrers zur Fahrbahn abgedeckt werden, da die Eigenschaften des Lenkgetriebes weitgehend unberücksichtigt bleiben.

Vorteile der Erfindung

Das erfindungsgemäße Verfahren mit den in Anspruch 1 genannten Merkmalen hat dem gegenüber den Vorteil, daß der Lenkkomfort erhöht ist, weil die "Stößigkeit" in Abhängigkeit von der Fahrtgeschwindigkeit geregelt werden kann. Dies wird insbesondere dadurch erreicht, daß das vom Elektromotor aufgebrachte Zusatzmoment in Abhängigkeit von dem Lenkmoment und Lenkaetriebeausgangsmoment gewählt wird.

Bevorzugt wird eine Ausführungsform des Verfahrens, bei dem die Regelung des Zusatzmoments mittels eines Kennlinienformers und eines nachgeschalteten Verstärkers erfolgt. Besonders bevorzugt wird dabei ein als Totglied ausgelegter Kennlinienformer, so daß die Unterstützung der Lenkkräfte in einem Bereich geringer Momentendifferenzen unterdrückt wird. Erst wenn größere Differenzen zwischen Lenk- und Ausgangsmoment vorhanden sind, greift die Unterstützung ein. Bei einem derartigen Verfahren ergibt sich bei allen Fahrgeschwindigkeiten ein besonders guter Fahrbahnkontakt, das heißt, der Fahrer bekommt ein optimales Gefühl für die Fahrbahnbeschaffenheit.

Besonders bevorzugt wird eine Ausführungsform des Verfahrens, bei dem als Stellkennlinie des Stelllinienformers ein stufenförmiger Kurvenverlauf gewählt wird. Bei Überschreiten eines bestimmten Grenzwerts der Momentendifferenz wird die Lenkhilfe aktiviert und greift mit einem geregelten Zusatzmoment in die Lenkeinrichtung ein. Das heißt, eine Zusatzkraft wird zusätzlich zur vom Fahrer aufgebrachten Lenkkraft in das System eingebracht.

Besonders bevorzugt wird ein Verfahren, bei dem die Grenzwerte, bei dem die Lenkhilfe aktiviert wird, in Abhängigkeit von der Geschwindigkeit des Fahrzeugs gewählt werden. Dadurch ist es möglich, die Hysteresebreite fahrzeuggeschwindigkeltsabhängig zu realisieren. Das hat zur Folge, daß der Fahrer insbesondere bei hoher Geschwindigkeit ein optimales Gefühl für die Fahrbahnbeschaffenheit hat.

Weitere Vorteile und Ausgestaltungen des Verfahrens ergeben sich aus den Unteransprüchen.

Zeichnung

Die Erfindung wird im folgenden anhand der Zeichnung näher erläutert. Es zeigen:

Figur 1 ein Blockschaltbild zur Verdeutlichung des erfindungsgemäßen Verfahrens;

Figur 2 ein Blockschaltbild des in Figur 1 dargestellten Reglers und

Figur 3 den Verlauf der Hysterese einer Lenkeinrichtung.

### Beschreibung eines Ausführungsbeispiels

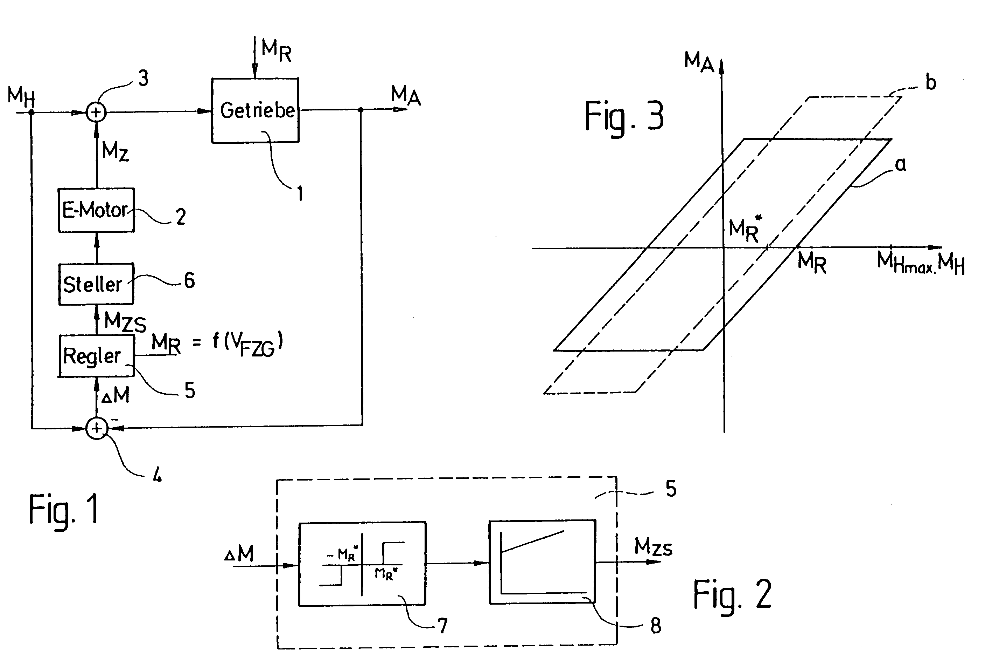

Figur 1 zeigt ein Lenkgetriebe 1 zwischen einem hier nicht dargestellten Lenkrad und den ebenfalls nicht wiedergegebenen gelenkten Rädern eines Fahrzeugs. In der Prinzipskizze wird von einem Getriebe mit einem Übersetzungsverhältnis ü=1 ausgegangen. Das Lenkgetriebe 1 gibt ein Ausgangs-Drehmoment M_{A} an die gelenkten Räder des Fahrzeugs ab. Die konstruktionsbedingte Reibung des Getriebes 1 wird hier durch ein Reibmoment M_{R} angedeutet. Das von dem Fahrer des Fahrzeugs mit der Hand aufzubringende Lenkmoment wird mit M_{H} bezeichnet. In das Getriebe 1 wird nicht nur das vom Fahrer aufgebrachte Drehmoment M_{H}, sondern auch ein Zusatzmoment M_{Z} eingebracht, welches beispielsweise von einem Elektromotor 2 aufgebracht wird, der unmittelbar oder über ein geeignetes Getriebe in das Lenkgestänge zwischen dem Lenkrad und dem Getriebe 1 eingreift. Es findet also eine Addition der beiden Drehmomente M_{H} und M_{Z} statt. Es ist hier ein erstes Additionsglied 3 zur Verdeutlichung dieser Funktion in Figur 1 wiedergegeben. Mit Hilfe eines zweiten Additionsglieds 4 wird die Differenz des von dem Fahrer des Fahrzeugs aufgebrachten Moments M_{H} und dem Ausgangsmoment M_{A} des Getriebes 1 gebildet. Die Momentdifferenz ΔM=M_{H}-M_{A} wird in einen Regler 5 eingegeben, der über ein Stellglied 6 auf den Elektromotor 2 einwirkt.

Dem Regler wird ein Reibmoment M_{R} eingegeben, das hier als Funktion der Fahrzeuggeschwindigkeit v_{FZG} gewählt wird. Dieses Reibmoment kann jedoch auch konstant oder abhängig von einer anderen Variablen sein.

Das Ausgangssignal des Reglers 5 wird als Soll-Zusatzmoment M_{ZS} bezeichnet. Dieses Zusatzmoment wird in das Stellglied 6 eingegeben.

In dem Stellglied 6 erfolgt eine Umwandlung des Ausgangssignals des Reglers 5 in eine variable Spannung, die am Elektromotor 2 anliegt. Dieser gibt ein Zusatzmoment M_{Z} an das erste Additionsglied 3 ab.

Dem Getriebe 1 wird also die Summe der Momente M_{H} und M_{Z} eingegeben.

Der Regler 5 kann beispielsweise einen Kennlinienformer 7 sowie einen nachgeschalteten Verstärker 8 aufweisen. Diese Ausführungsform ist in Figur 2 dargestellt. Dem Kennlinienformer wird die Momentendifferenz aus M_{H} und M_{A} eingegeben. In Figur 2 ist als Kennlinienformer ein Totglied dargestellt, das zwei Grenzwerte aufweist, nämlich -M*_{R} und M*_{R}. Der Betrag der beiden Grenzwerte ist vorzugsweise gleich groß, das Totzeitglied ist also symmetrisch ausgelegt. Bei Bedarf kann auch ein Totzeitglied mit Grenzwerten eingesetzt werden, deren Beträge nicht gleich sind. Die Stellkennlinie des Kurvenformers 7 stellt eine sprungförmige Funktion dar, die im Bereich von -M*_{R} ≦ M ≦ M*_{R} den Wert Null, unterhalb des unteren Grenzwerts einen konstanten negativen und oberhalb des oberen Grenzwerts einen konstanten positiven Wert annimmt.

Die Stellkennlinie kann statt des stufenförmigen Verlaufes in dem außerhalb von den Grenzwerten liegenden Bereich einen linearen Kurvenverlauf annehmen.

Das Ausgangssignal des Kurvenformers 7 wird dem Verstärker 8 eingegeben.

Aus dem in Figur 2 angedeuteten Kurvenverlauf für den Verstärker 8 ist ersichtlich, daß im vorliegenden Beispiel ein PI-Regler als Verstärker gewählt wurde.

Stattdessen kann auch ein P-Regler eingesetzt werden, jedoch ergibt sich dann in Figur 3 ein veränderter Kurvenverlauf: die ansteigenden und die abfallenden Linien sind verzerrt. Das Grundprinzip der Hystereseverringerung bleibt jedoch erhalten.

In Figur 3 ist ein Diagramm dargestellt, in dem der Verlauf des Ausgangsmoments M_{A} am Ausgang des Lenkgetriebes 1 über dem am Lenkrad aufzubringenden Moment M_{H} aufgetragen ist. Mit einer durchgezogenen Linie (Kurve a) ist der Momentenverlauf ohne die erfindungsgemäße Regelung dargestellt. Gestrichelt ist der Verlauf des Moments unter Einsatz der erfindungsgemäßen Regelung wiedergegeben (Kurve b).

Aufgrund des Reibmoments M_{R} des Lenkgetriebes 1 ergibt sich der parallelogrammartige Kurvenverlauf. Bei beiden Kurven beruhen die horizontalen Kurvenabschnitte auf der Reibung des Getriebes. Der Schnittpunkt der Kurve a mit der Abszisse wird durch das Reibmoment M_{R} des Getriebes 1 gegeben, der Schnittpunkt der gestrichelten Kurve b mit der Abszisse durch den Grenzwert M*_{R} des Kennlinienformers 7, bei dem die Regelung des Reglers 5 einsetzt.

Dadurch, daß bei Überschreiten des Grenzwertes M*_{R} der Regler 5 anspricht und ein Steuersignal über das Stellglied 6 an den Elektromotor 2 abgibt, wird bei Überschreiten des Grenzwertes ein Zusatzmoment M_{Z} an das Getriebe 1 abgegeben. Aus Figur 3 ist ersichtlich, daß durch den Einfluß des Reglers die Hysterese verringert wird. Das gestrichelt gezeichnete Parallelogramm für den Kurvenverlauf b ist schmaler als das für den Kurvenverlauf a ohne Regelung.

Der in Figur 1 dargestellte Regler 5 kann als Analogsystem ausgebildet sein, aber auch als Micro-Controller mit Soft-Ware realisiert werden.

Zur Erfassung des mit der Hand aufgebrachten Moments M_{H} am Lenkrad und des Ausgangsmoments M_{A} des Getriebes 1 werden Sensoren in den Kraftleitungsstrang integriert, die das Drehmoment in elektrisch auswertbare Signale umwandeln. Die Differenz der beiden Momente kann unmittelbar von dem Regler 5 gebildet werden, zumindest wenn dieser als Controller ausgebildet ist.

Über geeignete Sensoren wird die Fahrzeuggeschwindigkeit ermittelt, um den Grenzwert M*_{R} in Abhängigkeit von diesem Parameter einzustellen. Dabei kann der Wert dieses Reibungsmoments, der dem Regler 5 eingegeben wird, aus einem Kennlinienfeld entnommen werden.

Der Regler 5 erzeugt aus dem Differenzsignal der beiden Momente und dem Reibungswert ein puls-weiten-moduliertes Signal, aus dem das beispielsweise als Leistungssteller ausgebildete Stellglied 6 ein Ansteuersignal für den Elektromotor 2 erzeugt. Der Motor kann unmittelbar in das Lenkgestänge eingreifen.

Es kann aber auch ein geeignetes Getriebe zwischengeschaltet sein.

Nach allem ist ersichtlich, daß mit Hilfe dieses beschriebenen Verfahrens die Hysterese des Lenksystems vermindert wird. Dies ist ohne weiteres aus den in Figur 3 wiedergegebenen Kurvenverläufen ersichtlich. Der horizontale Kurvenabschnitt in der gestrichelt dargestellten Kurve b ist wesentlich kürzer als der horizontale Teil der durchgezogen dargestellten Kurve a, die ohne ein Regelverfahren der hier beschriebenen Art aufgenommen wurde.

## Patentansprüche

1. Verfahren zur Unterstützung der bei einem Fahrzeug aufzubringenden Lenkkräfte mittels eines auf die Lenksäule einwirkenden Elektromotors (2), **dadurch gekennzeichnet**, daß das vom Elektromotor (2) aufgebrachte Zusatzmoment (M_{Z}) in Abhängigkeit von der Differenz des vom Fahrer zur Betätigung der Lenkung aufzubringenden Lenkmoments (M_{H}) und von dem insgesamt vom Getriebe (1) abgegebenen Lenkmoment (M_{A}) geregelt wird.

2. Verfahren nach Anspruch 1, **dadurch gekennzeichnet**, daß die Regelung des Zusatzmoments (M_{Z}) mittels eines Kennlinienformers (7) und eines nachgeschalteten Verstärkers (8) erfolgt.

3. Verfahren nach Anspruch 2, **dadurch gekennzeichnet**, daß als Kennlinienformer (7) ein Totglied verwendet wird, so daß die Regelung nach Überschreiten eines ersten vorgebbaren Grenzwerts (M_{R}*) und/ oder nach Unterschreiten eines zweiten vorgebbaren Grenzwerts (-M_{R}*) aktiviert wird.

4. Verfahren nach Anspruch 3, **dadurch gekennzeichnet,** daß die Beträge der beiden Grenzwerte (M_{R}*,-M_{R}*) gleich sind.

5. Verfahren nach Anspruch 3 oder 4, **dadurch gekennzeichnet**, daß die Grenzwerte (M_{R}*,-M_{R}*) in Abhängigkeit von der Fortbewegungsgeschwindigkeit (v_{FZG}) des Fahrzeugs gewählt werden.

6. Verfahren nach einem der Ansprüche 2 bis 5, **dadurch gekennzeichnet**, daß außerhalb des Totbereichs des Totglieds als Stellkennlinie des Kennlinienformers ein stufenförmiger Kurvenverlauf gewählt wird.

7. Verfahren nach einem der Ansprüche 2 bis 5, **dadurch gekennzeichnet**, daß außerhalb des Totbereichs des Totglieds als Stellkennlinie des Kennlinienformers ein linearer Kurvenverlauf gewählt wird.

8. Verwahren nach Anspruch 2, **dadurch gekennzeichnet**, daß als Verstärker (8) ein P-Regler gewählt wird.

9. Verfahren nach Anspruch 2, **dadurch gekennzeichnet**, daß als Verstärker (8) ein PI-Regler gewählt wird.

## Claims

1. Method for assisting the steering forces to be produced in a vehicle by means of an electric motor (2) acting on the steering column, characterized in that the additional torque (M_{Z}) produced by the electric motor (2) is controlled as a function of the difference of the steering torque (M_{A}) to be produced by the driver for actuating the steering and of the steering torque (M_{A}) delivered overall by the gear (1).

2. Method according to Claim 1, characterized in that the additional torque (M_{Z}) is controlled by means of a characteristic former (7) and a downstream amplifier (8).

3. Method according to Claim 2, characterized in that a dead-time element is used as characteristic former (7), with the result that process regulation is activated after a first predeterminable limiting value (M_{R}*) has been exceeded and/or a second predeterminable limiting value (-M_{R}*) has been undershot.

4. Method according to Claim 3, characterized in that the magnitudes of the two limiting values (M_{R}*, -M_{R}*) are the same.

5. Method according to Claim 3 or 4, characterized in that the limiting values (M_{R}*, -M_{R}*) are chosen as a function of the speed of motion (V_{FZG}) of the vehicle.

6. Method according to one of Claims 2 to 5, characterized in that, outside the dead zone of the dead-time element, a stepped curve shape is chosen as actuating characteristic of the characteristic former.

7. Method according to one of Claims 2 to 5, characterized in that, outside the dead zone of the dead-time element, a linear curve shape is chosen as actuating characteristic of the characteristic former.

8. Method according to Claim 2, characterized in that a P controller is chosen as amplifier (8).

9. Method according to Claim 2, characterized in that a PI controller is chosen as amplifier (8).

## Revendications

1. Système d'assistance aux forces utilisées pour assurer la direction d'un véhicule, par l'intermédiaire d'un moteur électrique (2), agissant sur la colonne de direction, caractérisé en ce que la couple additionnel (M_{Z}) apporté par le moteur électrique (2) est régulé en fonction de la différence entre le couple (M_{H}), apporté par le conducteur au moyen du volant et le couple (M_{A}) délivré par l'ensemble de mécanisme de direction (1).

2. Système d'assistance selon la revendication 1, caractérisé en ce que la régulation du couple additionnel (M_{Z}) est assurée par un traceur à caractéristiques (7) suivi d'un amplificateur (8).

3. Système d'assistance selon la revendication 2, caractérisé en ce que le traceur à caractéristique (7) utilisé est un dispositif à temps mort, actionnant la régulation respectivement en deçà ou au-delà de deux valeurs limites prédéterminées (-M*_{R}) et (M_{R}).

4. Système d'assistance selon la revendication 3, caractérisé en ce que les deux valeurs limites (M*_{R}, -M*_{R}) ont la même valeur limite.

5. Système d'assistance selon la revendication 3 ou 4, caractérisé en ce que les valeurs limites (M*_{R}, -M*_{R}) sont choisies en fonction de la vitesse de déplacement du véhicule.

6. Système d'assistance selon une des revendications 2 à 5, caractérisé en ce qu'à l'extérieur de la zone inactive de l'organe à temps mort, la caractéristique de réglage du traceur de caractéristiques présente un tracé à gradins.

7. Système d'assistance selon une des revendications 2 à 5, caractérisé en ce qu'à l'extérieur de la zone inactive de l'organe à temps mort, la caractéristique de réglage de traceur de caractéristique à un tracé linéaire.

8. Système d'assistance selon la revendication 2, caractérisé en ce que l'amplificateur (8) est un P.régulateur (proportionnel).

9. Système d'assistance selon la revendication 2, caractérisé en ce que l'amplificateur (8) est un PI.Régulateur (proportionnel-intégral).
